# EUROPEAN PATENT APPLICATION

(11) **EP 4 807 573 A1**
(43) Date of publication of application: **16.09.2026**
(21) Application number: 25769248.3
(22) Date of filing: 26.02.2025
(51) Int. Cl.: G06F 15/17, G06F 13/42

(54) **DEVICE COMMUNICATION METHOD AND APPARATUS, CHIP, DEVICE, AND STORAGE MEDIUM**

(30) Priority: 11.03.2024 CN 202410276029
(71) Applicant: GUANGDONG OPPO MOBILE TELECOMMUNICATIONS CORP., LTD., Dongguan, Guangdong 523860 (CN)
(72) Inventor: LI, Rui, Dongguan, Guangdong 523860 (CN)
(74) Representative: Penza, Giancarlo
(86) International application number: PCT/CN2025/079169
(87) International publication number: WO 2025/190076

(57) **Abstract**

Embodiments of the disclosure provide a device communication method and apparatus, a chip, a device, and a storage medium, which are related to communication technologies. The method includes: a master device performs, based on a communication instruction including a public slave device address, synchronous communication with two or more slave devices. Different slave devices correspond to respective communication contents. Each slave device is configured with a private slave device address and the public slave device address. Different private slave device addresses are configured for different slave devices, and the same public slave device address is configured for different slave devices (201). The slave device communicates with the master device after receiving the communication instruction including the public slave device address. Different slave devices correspond to respective communication contents (202). The solutions provided by the embodiments of the disclosure help to improve the speed and efficiency of device communication.

## Description

### CROSS-REFERENCE OF RELATED APPLICATION

This application claims priority to Chinese Patent Application No. 202410276029.6, filed March 11, 2024, and entitled "DEVICE COMMUNICATION METHOD AND APPARATUS, CHIP, DEVICE, AND STORAGE MEDIUM", and the entire contents of which are incorporated herein by reference.

### TECHNICAL FIELD

Embodiments of the disclosure relate to the technical field of communication technologies, and particularly to a device communication method and apparatus, a chip, a device, and a storage medium.

### BACKGROUND

Inter-Integrated Circuit (I2C) is a multi-host communication protocol used for short-distance communication between chips.

In the I2C master-slave structure, each slave device has a unique address. When a master device needs to communicate with one of the slave devices, the master device first sends the address of the slave device on the bus to select the slave device, and then transmits data to the slave device through the bus.

### SUMMARY

Embodiments of the disclosure provide a device communication method and apparatus, a chip, a device, and a storage medium. The technical solutions are as follows.

In an aspect, some embodiments of the disclosure provide a device communication method implemented by a master device, and the master device is serially connected to two or more slave devices via a serial data line. The method includes:
performing synchronous communication with the two or more slave devices, based on a communication instruction comprising a public slave device address, where different slave devices correspond to respective communication contents respectively, each of the two or more slave devices is configured with a private slave device address and the public slave device address, different private slave device addresses are configured for the different slave devices, and the same public slave device address is configured for the different slave devices.

In another aspect, some embodiments of the disclosure provide a device communication method implemented by a slave device, and the slave device is serially connected to a master device via a serial data line. The method includes:
communicating with the master device after receiving a communication instruction comprising a public slave device address, where different slave devices correspond to respective communication contents respectively, each slave device is configured with a private slave device address and the public slave device address, different private slave device addresses are configured for the different slave devices, and the same public slave device address is configured for the different slave devices.

In yet another aspect, some embodiments of the disclosure provide a device communication apparatus including a master device communication module.

The master device communication module is configured to configured to perform synchronous communication with two or more slave devices, based on a communication instruction comprising a public slave device address, where different slave devices correspond to respective communication contents respectively, each of the two or more slave devices is configured with a private slave device address and the public slave device address, deferent private slave device addresses are configured for the different slave devices, and the same public slave device address is configured for the different slave devices.

In still another aspect, some embodiments of the disclosure provide a device communication apparatus including a slave device communication module.

The slave device communication module is configured to communicate with a master device after receiving a communication instruction including a public slave device address, where different slave device correspond to respective communication contents respectively, each slave device is configured with a private slave device address and the public slave device address, different private slave device addresses are configured for the different slave devices, and the same public slave device address is configured for the different slave devices.

In still yet another aspect, some embodiments of the disclosure provide a chip. The chip includes a programmable logic circuit and/or program instructions. The chip is configured to, when running, implement the device communication method on the master device side, or the device communication method on the slave device side according to the above aspects.

In still yet another aspect, some embodiments of the disclosure provide a computer device. The computer device includes a master device and two or more slave devices, where the master device is serially connected to the two or more slave devices via a serial data line.

A memory of the master device stores one or more instructions which, when being executed by a processor of the master device, cause the device communication method on the master device side according to the above aspect to be implemented.

A memory of the slave device stores one or more instructions which, when being executed by a processor of the slave device, cause the device communication method on the slave device side according to the above aspect to be implemented.

In still yet another aspect, some embodiments of the disclosure provide a computer-readable storage medium. The computer-readable storage medium stores one or more instructions which, when being loaded and executed by a processor, cause the processor to implement the device communication methods according to the above aspects.

In still yet another aspect, some embodiments of the disclosure provide a computer program product. The computer program product includes computer instructions stored in a computer-readable storage medium. A processor of a terminal reads the computer instructions from the computer-readable storage medium, and the processor is configured to execute the computer instructions to cause the terminal to implement the device communication methods according to the above aspects.

### BRIEF DESCRIPTION OF THE DRAWINGS

FIG. 1 is a schematic diagram illustrating a communication instruction between a master device and a slave device during an OIS control process in the related art.
FIG. 2 is a schematic flowchart of a device communication method according to some exemplary embodiments of the disclosure.
FIG. 3 is a schematic diagram illustrating a connection between the master device and the slave devices according to some exemplary embodiments of the disclosure.
FIG. 4 is a schematic flowchart of a write data process between the master device and the slave devices according to some exemplary embodiments of the disclosure.
FIG. 5 is a schematic diagram illustrating a structure of a communication instruction according to some exemplary embodiments of the disclosure.
FIG. 6 is a schematic diagram illustrating an instruction for a write data process according to some exemplary embodiments of the disclosure.
FIG. 7 is a schematic flowchart of a read data process between the master device and the slave devices according to some exemplary embodiments of the disclosure.
FIG. 8 is a schematic diagram illustrating an instruction for a read data process according to some exemplary embodiments of the disclosure.
FIG. 9 is a schematic diagram illustrating a data position configuration instruction according to some exemplary embodiments of the disclosure.
FIG. 10 is a schematic diagram illustrating a write content configuration instruction according to some exemplary embodiments of the disclosure.
FIG. 11 is a schematic diagram illustrating a read content configuration instruction provided by some exemplary embodiments of the disclosure.
FIG. 12 is a schematic diagram illustrating a read/write address configuration instruction according to some exemplary embodiments of the disclosure.
FIG. 13 is a flowchart of configuring a private slave device address according to some exemplary embodiments of the disclosure.
FIG. 14 is a schematic diagram illustrating an implementation of configuring a private slave device address according to some exemplary embodiments of the disclosure.
FIG. 15 is a schematic diagram illustrating a slave device address configuration instruction according to some exemplary embodiments of the disclosure.
FIG. 16 is a structural block diagram of a device communication apparatus according to some exemplary embodiments of the disclosure.
FIG. 17 is a structural block diagram of another device communication apparatus according to some exemplary embodiments of the disclosure.
FIG. 18 is a structural block diagram of a computer device according to some exemplary embodiments of the disclosure.

### DETAILED DESCRIPTION OF PREFERRED EMBODIMENTS

In order to make the objectives, technical solutions, and advantages of the disclosure clearer, implementations of the disclosure will be described in detail with reference to the drawings.

In the related art, a slave device is configured with a unique slave device address. When a master device communicates with the slave device, for example, when the master device needs to instruct the slave device to write data, or when the master device needs to read data written into the slave device, the master device sends the slave device address of the slave device on the bus to select the slave device, and then further communicates with the selected slave device.

When the master device needs to communicate with multiple slave devices, for example, when the master device needs to instruct different slave devices to write different data, or when the master device needs to read pieces of data that are written into different slave devices, the master device needs to communicate with the different slave devices through multiple instructions, and the multiple instructions need to be sent serially (i.e., the master device serially communicates with the different slave devices).

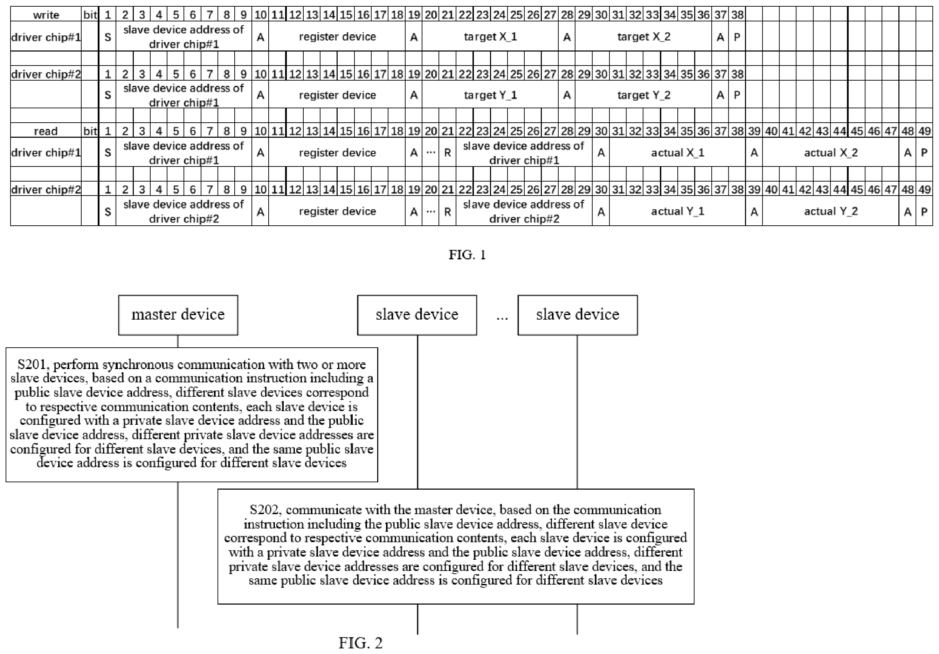

A case where a master device is a processor of a terminal, and slave devices include a driver chip #1 of an X-axis motor (controlling a lens to move in an X-axis direction) of a camera, and a driver chip #2 of a Y-axis motor (controlling the lens to move in a Y-axis direction) of the camera, is taken as an example. In one optical image stabilization (OIS) control process, the processor needs to write target motor positions to different driver chips (the driver chips control the motors according to the written target motor positions), and read actual motor positions from the driver chips. Communication instructions between the processor and the driver chips are illustrated in FIG. 1, where S represents a start identifier, A represents an acknowledgement signal, and P represents a stop identifier.

During one complete OIS control process, a total of 174 bits (38+38+49+49) of data are transmitted between the master device and the slave devices. Transmission of each bit of data takes 1µs, and a total data transmission time of 174µs is taken. Since the master device communicates with the slave devices via four instructions in total, and an interval between instructions is about 75µs, one complete OIS control process takes about 399µs (174+75×3) in total. Accordingly, a theoretical maximum control frequency for performing OIS control may reach 2.5kHz (1s/399µs), allowing 2500 OIS control operations per second.

However, as the number of cameras increases, the communication time required for OIS control would increase exponentially, resulting in a significant decrease in the frequency of OIS control, which in turn affects the optical image stabilization effect.

To shorten the communication time between the master device and the slave devices and reduce the number of instructions, in the solutions provided by the embodiments of the disclosure, the slave device is configured with not only a unique private slave device address but also a common public slave device address. The master device may perform, based on the private slave device address, one-to-one communication with the slave device, and may further perform, based on the public slave device address, one-to-many synchronous communication with the multiple slave devices each configured with the public slave device address. By using the solutions according to the embodiments of the disclosure, the master device is enabled to perform synchronous communication with two or more slave devices using a single communication instruction, which can significantly reduce the number of communication instructions compared with the case of performing serial communication with different slave devices. Moreover, when the number of communication instructions is reduced, the number of intervals between the communication instructions is reduced, thereby improving the communication speed between the master device and the slave devices.

The device communication method(s) according to the embodiments of the disclosure may be used for a computer device requiring communication between the master device and the salve devices. For example, the method(s) may be applied to an OIS system of a terminal to shorten a duration of a single OIS control operation, increase the frequency of OIS control, and thus enhance the OIS effect. Certainly, in addition to the OIS system, the method(s) may be further applied to a Proportional Integral Differential (PID) controller system (involving communication between a processor and different sensors), etc. The specific application scenario is not limited in the embodiments of the disclosure.

Referring to 2, FIG. 2 is a schematic flowchart of a device communication method according to some exemplary embodiments of the disclosure. The method may include operations as follows.

At S201, a master device performs, based on a communication instruction including a public slave device address, synchronous communication with two or more slave devices, where different slave devices correspond to respective communication contents respectively, each of the two or more slave devices is configured with a private slave device address and the public slave device address, different private slave device addresses are configured for the different slave devices, and the same public slave device address is configured for the different slave devices.

In the embodiments of the disclosure, the master device is serially connected to the two or more slave devices via serial data lines. This structure is similar to an I2C structure and is hardware compatible with the I2C protocol.

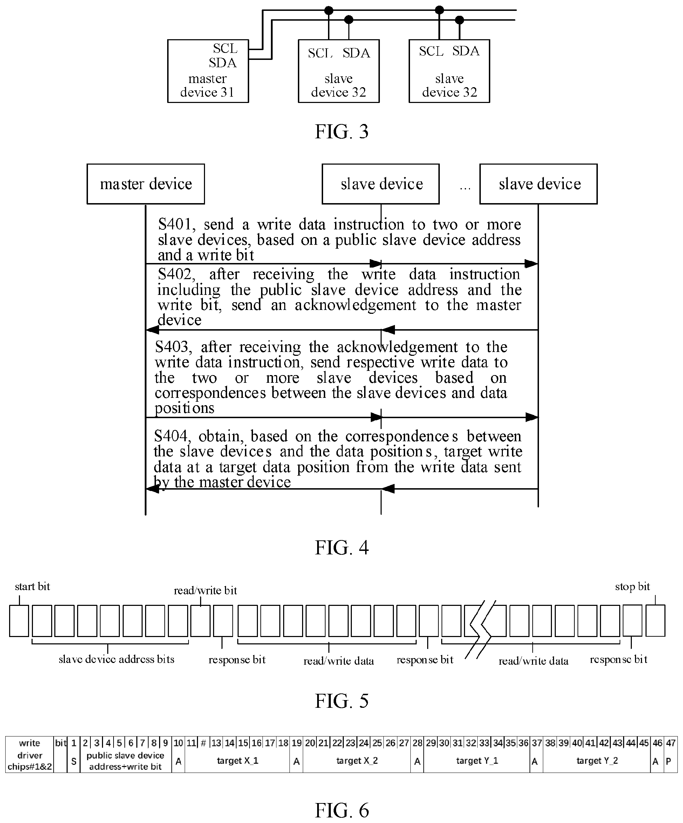

In a possible design, as illustrated in FIG. 3, a serial clock line (SCL) and a serial data line (SDA) are provided between the master device 31 and the slave devices 32. The SCL is configured to generate a synchronization signal between devices, and the SDA is configured to transmit data (including an instruction, read data and write data) between devices.

In a possible implementation, when the master device needs to perform synchronous communication with the two or more slave devices, the master device generates a communication instruction based on the public slave device address of the two or more slave devices, so that the master device performs, based on the communication instruction, synchronous communication with the two or more slave devices.

In some other possible implementations, when the master device needs to communicate with one particular slave device, the master device generates a communication instruction based on the private slave device address of the slave device, so that the master device performs, based on the communication instruction, one-to-one communication with the slave device.

In some alternative implementations, the private slave device address of the slave device may be set at the factory. The public slave device address of the slave device may be set at the factory (ensuring that the public slave device addresses set at the factory are the same) or be configured by the master device.

Each slave device has the unique private slave device address. Thus, the public slave device addresses of the at least two slave devices are the same, and the private slave device address and the public slave device address of a same slave device are different.

In a possible implementation, when a computer device includes a master device and n (n≥2) slave devices, the public slave device addresses of the n slave devices may be the same. In this case, the master device may perform synchronous communication with the n slave devices based on a communication instruction including the public slave device address.

When the n slave devices are divided into two or more slave groups (each slave group includes two or more slave devices), the slave devices in each slave group have the same public slave device address, and the slave devices in different slave groups have different public slave device addresses. The master device may synchronously communicate with the slave devices in a different slave group, based on a different public slave device address.

At S202, the slave devices communicate with the master device, after receiving the communication instruction including the public slave device address, where the different slave device correspond to respective communication contents respectively, each slave device is configured with a private slave device address and the public slave device address, different private slave device addresses are configured for the different slave devices, and the same public slave device addresses is configured for the different slave devices.

In a possible implementation, after a slave device receives the communication instruction sent by the master device via the serial data line, the slave device detects whether the slave device address in the communication instruction is its own public slave device address, that is, the slave device detects whether the slave device address in the communication instruction is consistent with its own public slave device address.

When the slave device address is its own public slave device address, the slave device communicates with the master device. Various slave devices may receive the communication instruction sent by the master device via the serial data line. Thus, when the multiple slave devices are configured with the same public slave device address, all of the multiple slave devices is capable of communicating with the master device via the serial data line.

When the slave device address is neither its own public slave device address nor its own private slave device address, the slave device determines that the communication instruction is not used for communication with itself, and ignores the communication instruction.

In some other embodiments, when the slave device address is the private slave device address of the slave device, this slave device determines that the communication instruction is used for private communication with itself, and responds to the communication instruction.

Based on the above, in the embodiments of the disclosure, each slave device is configured with both the common public slave device address and the unique private slave device address. When the master device communicates with devices based on a communication instruction including the public slave device address, the individual slave devices may identify the public slave device address in the communication instruction, and perform synchronous communication with the master device based on the respective communication contents of the slave devices. The solution according to the embodiments of the disclosure enables the master device to perform synchronous communication with the two or more slave devices through a single communication instruction. This can reduce the number of instructions required for communication compared with conventional communication methods, thereby improving the speed and efficiency of communication between devices.

In some alternative implementations, the communication instruction may be a write data instruction or a read data instruction.

In a possible implementation, based on a write data instruction including the public slave device address and a write bit, the master device performs write data communication with the two or more slave devices, i.e., the master device communicates with the two or more slave devices to write data into the two or more slave devices. Correspondingly, after receiving the write data instruction including the public slave device address and the write bit, the slave devices perform write data communication with the master device. The different slave devices correspond to respective write data respectively.

In a possible design, the communication instruction is provided with a read/write bit, and the master device indicates a function of the communication instruction by adjusting the value of the read/write bit. For example, when the value of the read/write bit is 1 (representing the write bit), the communication instruction is the write data instruction; and when the value of the read/write bit is 0 (representing the read bit), the communication instruction is the read data instruction.

In some alternative implementations, the read/write bit may be the first bit after the slave device address in the communication instruction.

In an illustrative example, for the OIS control system, the processor may synchronously write, to different driver chips, respective motor target positions (i.e., the write data), based on the write data instruction including the public slave device address. This eliminates the need to serially send, to the different slave devices, respective write data instructions in sequence based on the private slave device addresses of the different slave devices.

It can be seen that, based on a single write data instruction including the public slave device address, the master device may simultaneously write respective write data to the different slave devices, which reduces the number of write data instructions, and shortens the communication time. This helps to increase the OIS control frequency, and improves the OIS control effect (especially in scenarios with multiple cameras and multiple driver chips).

In another possible implementation, based on a read data instruction including the public slave device address and a read bit, the master device performs read data communication with the two or more slave devices, i.e., the master device communicates with the two or more slave devices to read data from the two or more slave devices. Correspondingly, after receiving the read data instruction including the public slave device address and the read bit, the slave devices perform read data communication with the master device, where the different slave devices correspond to respective read data respectively.

In an illustrative example, for the OIS control system, the processor may synchronously read, from different driver chips, respective actual motor positions (i.e., read data), based on the write data instruction including the public slave device address. This eliminates the need to serially send read data instructions to the different slave devices in sequence based on the private slave device addresses of the different slave devices.

In some alternative implementations, the master device may simultaneously read, from different slave devices, the corresponding read data based on the read data instruction (a single instruction) including the public slave device address, which reduces the number of write data instructions, and shortens communication time. This helps to increase the OIS control frequency and improve the OIS control effect (especially in scenarios with multiple cameras and multiple driver chips).

The following uses exemplary embodiments to describe the processes of synchronously performing a write data operation between the master device and the two or more slave devices, and synchronously performing a read data operations between the master device and the two or more slave devices.

Referring to 4, FIG. 4 is a schematic flowchart of a write data process between the master device and the slave devices according to some exemplary embodiments of the disclosure. The process may include operations as follows.

At S401, a master device sends a write data instruction to two or more slave devices, based on a public slave device address and a write bit.

In some possible implementations, when there is a need to write data to the two or more slave devices, the master device determines the public slave device address of the two or more slave devices. The master device writes the public slave device address into slave device address bits of the communication instruction. The master device sets, as the write bit, the read/write bit of the communication instruction, and sends the communication instruction (i.e., the write data instruction) via the serial data line.

Illustratively, as illustrated in FIG. 5, the master device writes the public slave device address of the two or more slave devices into the slave device address bits (from the second bit to the eighth bit), and writes the write bit into the read/write bit (the ninth bit).

At S402, after receiving the write data instruction including the public slave device address and the write bit, the slave device sends an acknowledgement to the master device.

Since the master device is connected to the individual slave devices via the serial data line, each slave device may receive the write data instruction sent by the master device via the serial data line.

In some possible implementations, after receiving the communication instruction, the slave device obtains the slave device address from the slave device address bits and the read/write bit data at the read/write bit. When the slave device address is consistent with the slave device's own public slave device address and the read/write bit is the write bit, the slave device determines that it has received the write data instruction that is directed to itself and sent by the master device.

To inform the master device whether the slave device has correctly received the write data instruction, the slave device sends a response for the write data instruction to the master device via the serial data line. In some alternative implementations, when the write data instruction is correctly received, the slave device sends an acknowledgment (ACK); and when the write data instruction is not correctly received, the slave device sends a non-acknowledgment (NACK).

It is notable that each of the two or more slave devices would respond to the write data instruction.

For example, as shown in FIG. 5, after correctly receiving the write data instruction, a slave device sends the acknowledgment at the tenth bit.

At 403, after receiving the acknowledgement to the write data instruction, the master device sends respective write data to the two or more slave devices based on correspondences between the slave devices and data positions, where the pieces of write data for the different slave devices are located at different data positions.

In some possible implementations, after sending the write data instruction, the master device waits for responses from the slave devices. After receiving an acknowledgement (the acknowledgement from one or more of the slave devices), the master device sends the respective write data to the two or more slave devices.

In some alternative implementations, when a non-acknowledgment is received, the master device re-sends the write data instruction until an acknowledgement is received.

Since respective write data needs to be written to the different slave devices, and the pieces of write data for the different slave devices may be different, in order to ensure the accuracy of the data write operation, in some embodiments, the master device maintains the correspondences between the individual slave devices and the data bits, where the different slave devices correspond to different data bits. Based on such correspondences, the master device sends the write data at different data bits to different slave devices.

In some possible implementations, when data is written in bytes, the correspondences are used to indicate write byte identifiers corresponding to the different slave devices. For example, the correspondences indicate that slave device 1 corresponds to write byte identifiers 2 and 3 (i.e., the content of the second and third bytes are the write data for slave device 1), and slave device 2 corresponds to write byte identifiers 4 and 5 (i.e., the content of the fourth and fifth bytes are the write data for slave device 2).

In a possible design, the correspondences between the slave devices and the data positions are unchangeable. For example, during factory settings, the correspondences between the slave devices and the data positions is set to be unchangeable in the master device.

In another possible design, to improve flexibility, the correspondences between slave devices and data positions are configured by the master device, and the correspondences are changeable. For example, before performing a write data operation, the master device configures the above correspondences for the slave devices on which the write data operation needs to be performed.

It is notable that, regardless of the configuration manner adopted, the correspondences configured at the master device remains consistent with the correspondences configured at the respective slave devices, thereby ensuring that the slave devices correctly receive the respective write data thereof.

For example, when the master device needs to perform the write data operation on slave devices 1 and 2, in the correspondences configured by the master device, slave device 1 corresponds to write byte identifiers 2 and 3, and slave device 2 corresponds to write byte identifiers 4 and 5. Illustratively, when the master device needs to write data to slave devices 2 and 3, in the correspondences configured at the master device, the write byte identifiers for slave device 2 are 2 and 3, and the write byte identifiers for slave device 3 are 4 and 5.

At S404, the slave device obtains, based on the correspondences between the slave devices and the data positions, target write data at a target data position from the write data sent by the master device, where pieces of write data for the different slave devices are located at different data positions.

In a possible implementation, each slave device knows its own target data position, and obtains the target write data at the target data position from the write data sent by the master device. The target write data is data that the master device needs to write to the current slave device.

In a possible design, the target data position corresponding to each slave device is unchangeable. For example, during the factory settings, the slave device stores the target data position corresponding to each slave device.

In another possible design, to increase flexibility, the target data positions corresponding to the slave devices are configured by the master device, that is, the target data position of the same slave device may be changed. For example, before writing data, the master device notifies the slave device of the configured target data position.

In some embodiments, to inform the master device whether the write data is correctly received, the slave device sends a reception response to the master device based on a reception status of the write data. When the write data is correctly received, the slave device sends an acknowledgment (ACK); and when the write data is not correctly received, the slave device sends a non-acknowledgment (NACK).

Correspondingly, the master device determines a subsequent processing flow based on the reception response. In some alternative implementations, when the acknowledgment is received, the master device continues to send the write data to the next slave device.

In some other alternative implementations, when the non-acknowledgement is received, the master device may re-send the write data until the write data is correctly received. Alternatively, the acknowledgement may be ignored, and the master device may continue to send the write data to the next slave device. This is not limited in the embodiments of the disclosure.

For example, as illustrated in FIG. 5, the master device may send respective write data to the different slave devices in different bytes, and the slave device would send the reception response at a response bit corresponding to the slave device. When the write data for each slave device is sent, the master device sends a stop bit to inform the slave devices that the current data writing is finished.

In the OIS control scenario, taking a case where the public slave device address of each driver chip occupies 7 bits and the write data of each driver chip occupies 2 bytes as an example, as illustrated in FIG. 6, when the processor needs to write the motor target positions to driver chips #1 and 2 respectively, a single write data instruction may be used to complete the data writing. In this write data instruction, the first bit is the public slave device address of driver chips #1 and 2 and the write bit, the second and third bytes are the write data for driver chip #1, and the fourth and fifth bytes are the write data for driver chip #2.

In the embodiments, based on the correspondences between the slave devices and the data positions, the master device sends the write data corresponding to each slave device at the data position corresponding to the slave device, and the slave device reads the write data based on the correspondences. This improves the speed of the write data operation and ensures the accuracy of data writing.

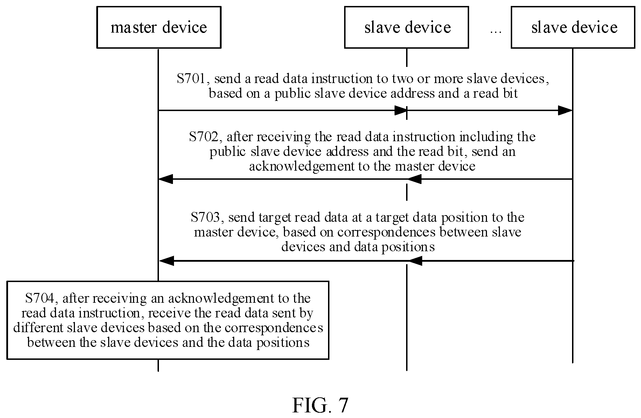

Referring to FIG. 7, FIG. 7 is a schematic flowchart of a read data process according to some exemplary embodiments of the disclosure. The process may include the operations as follows.

At S701, a master device sends a read data instruction to two or more slave devices, based on a public slave device address and a read bit.

In some possible implementations, when there is a need to read data from the two or more slave devices, the master device determines the public slave device address of the two or more slave devices. The master device writes the public slave device address into slave device address bits of the communication instruction. The master device sets, as the read bit, the read/write bit of the communication instruction, and sends the communication instruction (i.e., the read data instruction) via the serial data line.

Illustratively, as illustrated in FIG. 5, the master device writes the public slave device address of the two or more slave devices into the slave device address bits (from the second bit to the eighth bit), and writes the read bit into the read/write bit (the ninth bit).

At S702, after receiving the read data instruction including the public slave device address and the read bit, the slave device sends an acknowledgement to the master device.

Since the master device is connected to the individual slave devices via the serial data line, each slave device may receive the read data instruction sent by the master device via the serial data line.

In some possible implementations, after receiving the communication instruction, the slave device obtains the slave device address at the slave device address bits and the read/write bit data at the read/write bit. When the slave device address is consistent with the slave device's own public slave device address and the read/write bit is the read bit, the slave device determines that it has received the read data instruction that is directed to itself and sent by the master device.

To inform the master device whether the slave device has correctly received the read data instruction, the slave device sends a response for the read data instruction to the master device via the serial data line. In some alternative implementations, when the read data instruction is correctly received, the slave device sends an acknowledgment (ACK); and when the read data instruction is not correctly received, the slave device sends a non-acknowledgment (NACK).

It is notable that each of the two or more slave devices would respond to the read data instruction.

For example, as shown in FIG. 5, after correctly receiving the read data instruction, a slave device sends the acknowledgment at the tenth bit.

At S703, each slave device sends target read data at a target data position to the master device, based on a correspondence between the slave device and a data position, where the pieces of read data sent by the different slave devices are located at different data positions.

Since the different slave devices have respective read data, and the read data of the different slave devices may be different, in order to ensure the accuracy of data reading operations, in some embodiments, each slave device has its own corresponding data position. After receiving the read data instruction sent by the master device, each slave device sends the target read data to the master device at the target data position corresponding to the slave device, so that the master device may determine which slave device the read data belongs to, based on the data position where the received read data is located.

In some possible implementations, when data reading operation is performed in bytes, the correspondences are used to indicate read byte identifiers corresponding to the different slave devices. For example, the correspondences indicate that slave device 1 corresponds to read byte identifiers 2 and 3 (i.e., the content of the second and third bytes are the read data of slave device 1), and slave device 2 corresponds to read byte identifiers 4 and 5 (i.e., the content of the fourth and fifth bytes are the read data of slave device 2).

In a possible design, the target data positions corresponding to the slave devices are unchangeable. For example, during the factory settings, the slave device stores the target data position corresponding to this slave device.

In another possible design, to increase flexibility, the target data positions corresponding to the slave devices are configured by the master device, that is, the target data position of the same slave device may be changed. For example, before reading data, the master device notifies the slave device of the configured target data position.

For example, when the master device needs to read data from slave devices 1 and 2, slave device 1 corresponds to write byte identifiers 2 and 3, and slave device 2 corresponds to write byte identifiers 4 and 5. Illustratively, when the master device needs to read data from slave devices 2 and 3, the write byte identifiers for slave device 2 are 2 and 3, and the write byte identifiers for slave device 3 are 4 and 5.

At S704, after receiving an acknowledgement to the read data instruction, the master device receives the read data sent by the different slave devices based on the correspondences between the slave devices and the data positions, where the prices of read data from the different slave devices are located at different data positions.

Corresponding to the slave devices sending the read data at the respective data positions, when the master device receives the read data sent by the slave devices, it determines which slave device the read data belongs to, based on the data position where the read data is located and the correspondences between the slave devices and the data positions.

In some embodiments, the master device sends a reception response to the slave device based on a reception status of the read data, so as to inform the slave device whether the read data is correctly received. When the read data is correctly received, the slave device sends an acknowledgment (ACK); and when the read data is not correctly received, the slave device sends a non-acknowledgment (NACK).

In a possible design, the correspondences between the slave devices and the data positions are unchangeable. For example, during factory settings, the correspondences between the slave devices and the data positions are set to be unchangeable in the master device.

In another possible design, to improve flexibility, the correspondences between slave devices and data positions are configured by the master device, and the correspondences are variable. For example, before performing a read data operation, the master device configures the above correspondences for the slave devices on which the read data operation needs to be performed.

It is notable that, regardless of the configuration manner adopted, the correspondences configured at the master device remains consistent with the correspondences configured at the respective slave devices, thereby ensuring that the master device can accurately determine the slave device to which the read data belongs.

For example, as illustrated in FIG. 5, each slave device may send read data to different master devices at the byte corresponding to the slave device. The master device receives the read data, determines a source of the read data based on the byte where the read data is located, and sends the reception response at the response bit. When the read data from the all the individual slave devices has been received, the master device sends a stop bit to inform the slave devices that the current data reading is finished.

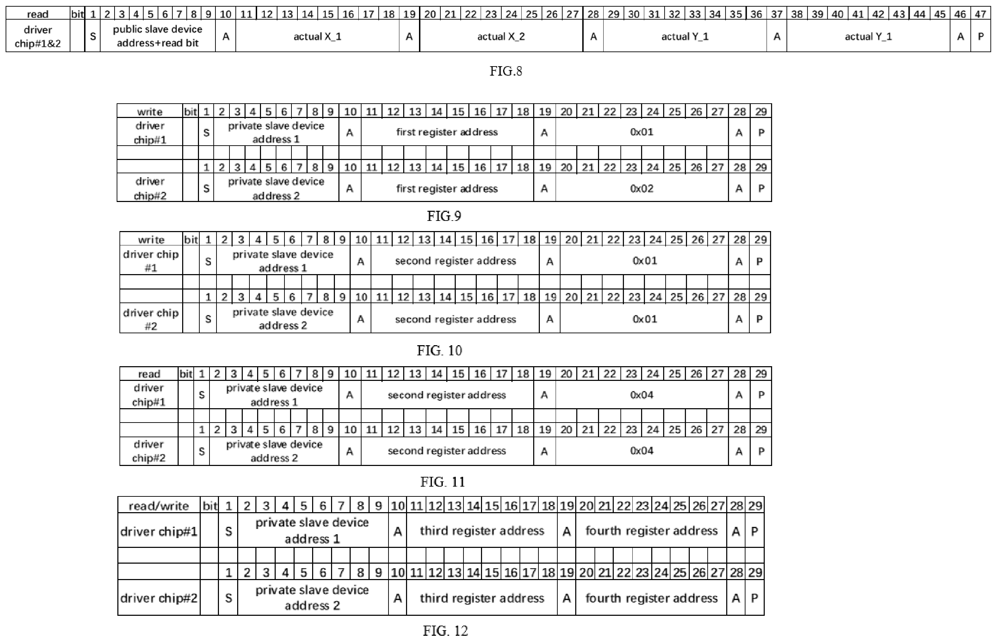

In the OIS control scenario, it is illustrated by taking a case where the public slave device address of each driver chip occupies 7 bits and the read data of each driver chip occupies 2 bytes as an example. As illustrated in FIG. 8, when the processor needs to read the actual motor positions of driver chips #1 and 2 respectively, after a single read data instruction is sent based on the public slave device address and the read bit, driver chip #1 sends its own read data to the master device at bytes 2 and 3, and driver chip #2 sends its own read data to the master device at bytes 4 and 5.

In the embodiments, the master device receives the read data sent by the slave devices at the respective data positions corresponding to the slave devices, based on the correspondences between the slave devices and the data positions, thereby improving the speed of the read data operation while ensuring the accuracy of data reading.

Combined with the examples of FIG. 6 and FIG. 8, during one complete OIS control process, using the solution according to the embodiments of the disclosure, a total of 94 bits (47+47) of data are transmitted between the master device and the slave devices. Transmission of each bit takes 1µs, and a total data transmission time of 94µs is taken. Since the master device and the slave device communicate through a total of two instructions, and the interval between adjacent instructions is about 75µs, one complete OIS control process takes about 169µs (94+75) in total, which is 230µs less than the conventional solution. Accordingly, by using the solution of the disclosure, the theoretical maximum control frequency for performing OIS control may reach 5.917kHz (1s/169µs), allowing 5917 OIS control operations per second.

As the number of slave devices increases, the benefits on the communication time consumption brought by the solution according to the embodiments of the disclosure become more obvious. For example, for a terminal configured with 4 cameras and each camera being provided with 2 driver chips, the total time consumed for one OIS control using the conventional solution is 38×8+49×8+75×15=1821µs, while the total time consumed for one OIS control using the solution of the disclosure is only (47+9×4×3)×2+75=385µs, and the maximum control frequency of the OIS control is increased from 0.55kHz to 2.59kHz.

In the embodiments of the above read/write communication process, when the correspondences between the slave devices and the data positions are configured by the master device, in some possible implementations, before the master device and a slave device perform the read/write operations, the master device sends a data position configuration instruction to each of the slave devices, based on the private slave device address of the slave device, and the data position configuration instruction is used to configure the data position used for the slave device to perform data reading/writing.

In some embodiments, when the master device needs to perform the read/write operation with a specified slave device among all slave devices, the master device sends the data position configuration instruction to the specified slave device, based on the private slave device address of the specified slave device. The master device sends the data position configuration instruction to the slave device in a serial manner. The data position configuration instructions sent to the different slave devices includes different private slave device addresses.

Accordingly, the slave device receives the data position configuration instruction sent by the master device. Since the different slave devices correspond to different private slave device instructions, only the slave device whose private slave device address is consistent with the private slave device address in the instruction would respond to the data position configuration instruction.

In some alternative implementations, when the slave device receives the data position configuration instruction and the private slave device address included in the data position configuration instruction is the private slave device address of the slave device, the slave device configures the data position for data reading/writing based on the data position configuration instruction.

When the data position configuration instruction is received, but the private slave device address included in the data position configuration instruction does not match the private slave device address of the slave device, the slave device would not respond to the instruction.

Regarding the content in the data position configuration instruction, in some possible implementations, the master device sends the data position configuration instruction to the slave device, based on the private slave device address of the slave device, a first register address and a data position identifier. A first register indicated by the first register address is used to store the data position identifier, and the data position identifier is used to indicate the data position used for the slave device to perform data reading/writing (i.e., a read/write data position).

In some alternative implementations, the slave device is configured with the first register for storing the data position identifier corresponding to the read/write data position, and the master device sends the data position configuration instruction to instruct the slave device to write the data position identifier into the first register.

In some alternative implementations, the slave device writes the data position identifier into the first register indicated by the first register address, and the data position identifier is used to indicate the data position used for the slave device to perform data reading/writing. For subsequent read/write operations, the slave device determines the data position for data reading/writing based on the data position identifier in the first register.

In some embodiments, the data position configuration instruction further includes a write bit. When the slave device identifies the write bit, the slave device writes the data position identifier into the first register.

It is notable that the master device may dynamically adjust the read/write data position of the slave device by modifying the data position identifier. Accordingly, when the slave device receives the data position configuration instruction directed to itself, the slave device would update, according to the data position identifier in the instruction, the existing data position identifier in the first register.

In a possible design, there is a mapping relationship between the data position identifiers and the data positions, and the mapping relationship is configured in the master and each of the slave devices. The master device, based on data position allocation of the slave devices and the mapping relationship, writes the determined data position identifier into the data position configuration instruction. The slave device, based on the mapping relationship, maps the read data position identifier to an actual data position, and performs data reading/writing. For example, the mapping relationship between the data position identifiers and the data positions is given in Table 1.

**Table 1**

| Data position identifier | Data position |
|---|---|
| 0x01 | the first and second bytes |
| 0x02 | the third and fourth bytes |
| 0x03 | the fifth and sixth bytes |
| 0x04 | the seventh and eighth bytes |

In an illustrative example, driver chip #1 corresponds to private slave device address 1, and driver chip #2 corresponds to private slave device address 2. FIG. 9 illustrates the data position configuration instruction sent by the master device, in a case where driver chips #1 and 2 need to be configured with respective data positions, the data positions of driver chip #1 are bytes 1 and 2, and the data positions of driver chip #2 are bytes 3 and 4.

In the embodiments, when the master device performs the read/write operation with the slave devices, the master device configures the respective read/write data positions for the different slave devices through data position configuration instructions. This allows the subsequent read/write data operation can be accurately performed by the slave device based on the read/write data position identifier, thereby ensuring the accuracy of the read/write operation while ensuring configuration flexibility.

In addition to configuring the respective read/write data position of each slave device, before performing the read/write operation, the master device also needs to configure a data read/write address or data read/write content for each slave device, that is, the master device needs to configure where the slave device writes data, and where the slave device reads data, and to configure what kind of data the slave device writes, and what kind of data the slave device reads.

In some possible implementations, the master device sends a read/write content configuration instruction to a slave device, based on the private slave device address of the slave device. The read/write content configuration instruction is used to configure read/write data content of the slave device. The slave device receives the read/write content configuration instruction sent by the master device, and configures the read/write data content based on the read/write content configuration instruction.

Similar to configuring the data positions, the master device configures the read/write contents for the different slave devices based on the private slave device addresses. The read/write contents configured for the different slave devices may be the same or different.

In some alternative implementations, the slave device is configured with correspondences between data contents and addresses. After configuring the read/write data content, the slave device may determine the data read/write address corresponding to the read/write data content, based on the correspondences and the read/write data content indicated by the master device. The data read address and the data write address are different.

In some embodiments, the master device sends the read/write content configuration instruction to the slave device, based on the private slave device address of the slave device, a second register address, and a data content identifier. A second register indicated by the second register address is used to store the data content identifier, and the data content identifier is used to indicate the read/write data content of the slave device. A second register for storing the read data content identifier is different from a second register for storing the write data content identifier.

Accordingly, the slave device writes the data content identifier into the second register indicated by the second register address.

In some alternative implementations, when a slave device receives a read/write data instruction, the slave device reads the data content identifier in the second register based on the second register address, then determines the read data address/write data address according to the data content identifier, and performs the data read/write operation based on the read data address/write data address.

In some alternative implementations, when the slave device subsequently performs a write operation, the salve device determines the data read/write address corresponding to the read/write data content, based on the correspondences between data contents and addresses. Consequently, when a write data instruction including the public slave device address and the write bit is received, the salve device performs the write data communication with the master device based on the data read/write address, that is, the salve device writes the data sent by the master device into the data read/write address.

In some alternative implementations, when the slave device subsequently performs a read operation, after receiving a read data instruction including the public slave device address and the read bit, the slave device performs read data communication with the master device based on the data read/write address, i.e., the slave device feeds back the data read from the data read/write address to the master device.

In an illustrative example, the correspondences between the data content identifiers and the data read/write addresses are shown in Table 2.

**Table 2**

| Data content identifier | Data write/read address |
|---|---|
| 0x01 (a target position of a motor) | Data write/read address 1 |
| 0x02 (a current of the motor) | Data write/read address 2 |
| 0x03 (a voltage of the motor) | Data write/read address 3 |
| 0x04 (an actual position of the motor) | Data write/read address 4 |

In an illustrative example, driver chip #1 corresponds to private slave device address 1, and driver chip #2 corresponds to private slave device address 2. FIG. 10 illustrates a write content configuration instruction sent by the master device, when driver chips #1 and 2 need to be configured with respective data write contents. FIG. 11 illustrates a read content configuration instruction sent by the master device, when driver chips #1 and 2 need to be configured with respective data write contents.

In another possible implementation, the master device sends a read/write address configuration instruction to the slave device based on the private slave device address of the slave device. The read/write address configuration instruction is used to configure the data read/write address of the slave device. The slave device receives the read/write address configuration instruction sent by the master device, and configures the data read/write address based on the read/write address configuration instruction.

Similar to configuring the data positions, the master device configures the data read/write address for each slave device based on the private slave device address. The data read address and data write address configured for the same slave device are different.

After the read/write address configuration is completed, when a read/write operation is performed subsequently, the slave device may read data according to the data read address, and feed back the data to the master device. The salve device may write, according to the data write address, the write data sent by the master device to the correct position.

In some embodiments, the master device sends the read/write address configuration instruction to a slave device, based on the private slave device address of the slave device, a third register address, and a fourth register address. The third register indicated by the third register address is used to store the fourth register address, and the fourth register address is a register address used for the slave device to perform data reading/writing.

Accordingly, the slave device writes the fourth register address into the third register indicated by the third register address, and the fourth register address is the register address used for the slave device to perform data reading/writing.

In some alternative implementations, when the slave device receives the read/write data instruction, the fourth register address is read from the third register based on the third register address, so that the slave device reads the data in the fourth register based on the fourth register address and feeds back the data to the master device. Alternatively, the slave device write, based on the fourth register address, the write data sent by the master device into the fourth register.

In some alternative implementations, when the slave device subsequently performs the write operation, after receiving the write data instruction including the public slave device address and the write bit, the salve device performs write data communication with the master device based on the fourth register address, i.e., the slave device writes the write data into the fourth register corresponding to the fourth register address.

In some alternative implementations, when the slave device subsequently performs the read operation, after receiving the read data instruction containing the public slave device address and the read bit, the slave device performs the read data communication with the master device based on the fourth register address, i.e., the slave device reads data from the fourth register corresponding to the fourth register address and feeds back the data to the master device.

In an illustrative example, driver chip #1 corresponds to private slave device address 1, driver chip #2 corresponds to private slave device address 2, and FIG. 12 illustrates the read/write address configuration instruction sent by the master device for configuring the data read/write addresses for driver chips #1 and 2.

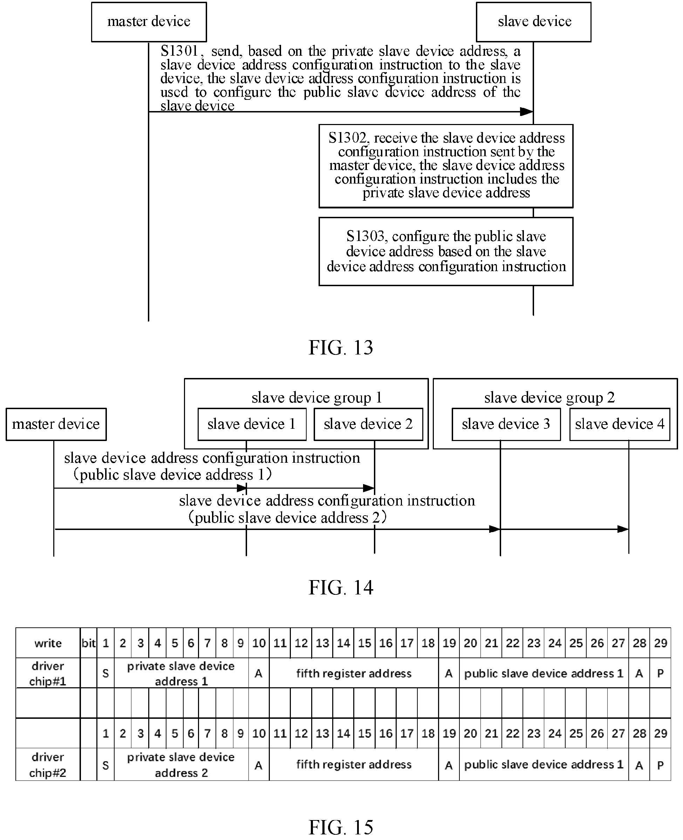

Regarding the master device configuring the public slave device address of each slave device, as illustrated in FIG. 13, the process may include the operations as follows.

At S1301, the master device sends a slave device address configuration instruction to the slave device based on the private slave device address of the slave device, where the slave device address configuration instruction is used to configure the public slave device address of the slave device.

When the master device needs to perform synchronous communication with two or more slave devices, the master device sends, to each of the two or more slave devices, the slave device address configuration instruction including the same public slave device address.

In some alternative implementations, when the slave devices are divided into two or more slave device groups, and each slave device group includes two or more slave devices, the master device may allocate different public slave device addresses to different slave device groups, and configure the same public slave device addresses for the slave devices in the same slave device group.

In an illustrated example, as illustrated in FIG. 14, slave devices 1 and 2 belong to slave group 1, and slave device groups 3 and 4 belong to slave group 2. The master device may send a slave device address configuration instruction including public slave device address 1 to slave devices 1 and 2; and the master device may send a slave device address configuration instruction including public slave device address 2 to slave devices 3 and 4. In subsequent processes, the master device may synchronously communicate with slave devices 1 and 2 based on public slave device address 1, and the master device may synchronously communicate with slave devices 3 and 4 based on public slave device address 2.

In some possible implementations, the slave device address configuration instruction includes the private slave device address of the slave device, a fifth register address, and the public slave device address, where the fifth register indicated by the fifth register address is used to store the public slave device address of the slave device. That is, the master device sends the slave device address configuration instruction to the slave device, based on the private slave device address, the fifth register address, and the public slave device address.

In an illustrative example, driver chip #1 corresponds to private slave device address 1, driver chip #2 corresponds to private slave device address 2, and driver chips #1 and 2 belong to the same slave device group. When the master device configures the common public slave device address 1 for driver chips #1 and 2, the master device sends the slave device address configuration instruction as illustrated in FIG. 15.

At S1302, the slave device receives the slave device address configuration instruction sent by the master device, where the slave device address configuration instruction includes the private slave device address.

At S1303, the slave device configures the public slave device address based on the slave device address configuration instruction.

After the slave device receives the slave device address configuration instruction including its own private slave device address, the slave device configures its own public slave device address according to the instruction.

In a possible implementation, the slave device writes the public slave device address into the fifth register indicated by the fifth register address. The fifth register is used for storing the public slave device address.

In a possible scenario, the master device may update the public slave device address of the slave device. Accordingly, when the slave device receives the slave device address configuration instruction and the fifth register already stores a public slave device address, the slave device would update the public slave device address in the fifth register according to the public slave device address in the slave device address configuration instruction.

When performing the subsequent read/write operation, the slave device compares the public slave device address stored in the fifth register with the slave device address in the instruction sent by the master device, to determine whether the slave device addresses are consistent. The slave device responds to the instruction when the slave device addresses are consistent.

In the embodiments, the master device may configure the public slave device address for the slave devices, according to requirements for synchronous communication. This helps to improve the flexibility of synchronous communication, compared with the unchanged setting of the public slave device address of the slave devices. That is, the master device may dynamically adjust the slave device for synchronous communication according to the requirements.

It is notable that, in the above various embodiments, each register of the slave device has a designated use (i.e., the first register is used to store the data position identifier, and the second register is used to store the data content identifier). The slave device may determine the purpose of the instruction sent by the master device, based on the register address in the instruction (for example, when an instruction including the first register address is received, the slave device determines that this instruction is used for data position configuration). The uses of the various registers configured at the master device and the slave device are consistent to ensure the accuracy of the master device's configuration for the slave device.

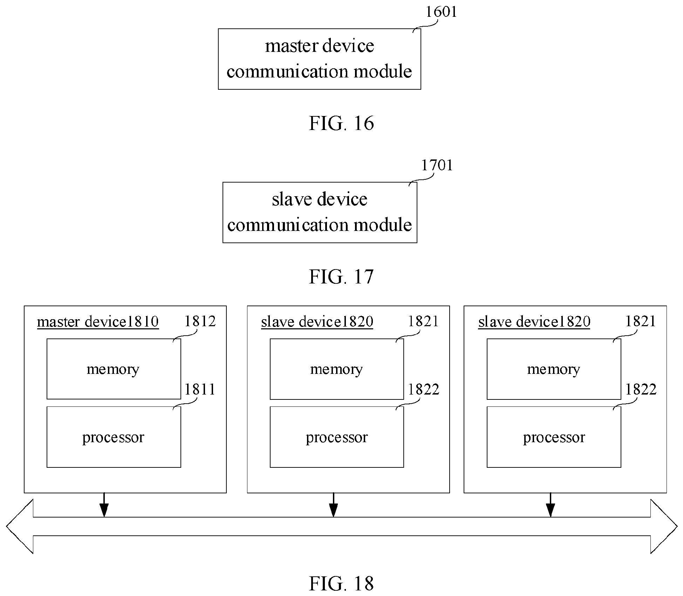

Referring to 16, FIG. 16 is a structural block diagram of a device communication apparatus according to some exemplary embodiments of the disclosure. The apparatus includes a master device communication module 1601.

The master device communication module 1601 is configured to perform synchronous communication with two or more slave devices, based on a communication instruction including a public slave device address, where different slave devices correspond to respective communication contents respectively, each of the two or more slave devices is configured with a private slave device address and the public slave device address, different private slave device addresses are configured for the different slave devices, and the same public slave device address configured for the different slave devices.

In some alternative implementations, the master device communication module 1601 is configured to:
perform write data communication with the two or more slave devices, based on a write data instruction including the public slave device address and a write bit, where the different slave devices corresponds to respective write data respectively; or
perform read data communication with the two or more slave devices, based on a read data instruction including the public slave device address and a read bit, where the different slave devices correspond to respective read data respectively.

In some alternative implementations, the master device communication module 1601 is configured to:
send the write data instruction to the two or more slave devices, based on the public slave device address and the write bit; and
after receiving an acknowledgement to the write data instruction, send the respective write data to the two or more slave devices based on correspondences between the slave devices and data positions, where the pieces of write data for the different slave devices are located at different data positions respectively.

In some alternative implementations, the master device communication module 1601 is configured to:
send the read data instruction to the two or more slave devices, based on the public slave device address and the read bit; and
after receiving an acknowledgement to the read data instruction, receive read data sent by the different slave devices based on the correspondences between the slave devices and data positions, where the pieces of read data from the different slave devices are located at different data positions respectively.

In some alternative implementations, the apparatus further includes a configuration module, configured to:
send a data position configuration instruction to each of the slave devices based on the private slave device address of the slave device, where the data position configuration instruction is used to configure a data position used for the slave device to perform data reading/writing.

In some alternative implementations, the configuration module is configured to:
send the data position configuration instruction to each of the slave devices, based on the private slave device address of the slave device, a first register address, and a data position identifier, where a first register indicated by the first register address is used to store the data position identifier, and the data position identifier is used to indicate the data position used for the slave device to perform data reading/writing.

In some alternative implementations, the apparatus further includes a configuration module, configured to:
send a read/write content configuration instruction to each of the slave devices based on the private slave device address of the slave device, where the read/write content configuration instruction is used to configure read/write data content of the slave device, so that the slave device determines a data read/write address based on a correspondence between data content and an address; or
send a read/write address configuration instruction to each of the slave devices based on the private slave device address of the slave device, where the read/write address configuration instruction is used to configure a data read/write address of the slave device.

In some alternative implementations, the configuration module is further configured to: send the read/write content configuration instruction to each of the slave devices, based on the private slave device address of the slave device, a second register address, and a data content identifier, where a second register indicated by the second register address is used to store the data content identifier, and the data content identifier is used to indicate read/write data content of the slave device.

In some alternative implementations, the configuration module is configured to: send the read/write address configuration instruction to each of the slave devices, based on the private slave device address of the slave device, a third register address, and a fourth register address, where a third register indicated by the third register address is used to store the fourth register address, and the fourth register address is an address where the slave device performs data reading/writing.

In some alternative implementations, the apparatus further includes a configuration module configured to send a slave device address configuration instruction to each of the slave devices based on the private slave device address of the slave device, where the slave device address configuration instruction is used to configure the public slave device address of the slave device.

In some alternative implementations, the configuration module is configured to: send the slave device address configuration instruction to each of the slave device, based on the private slave device address of the slave device, a fifth register address, and the public slave device address, where a fifth register indicated by the fifth register address is used to store the public slave device address.

Referring to 17, FIG. 17 is a structural block diagram of a device communication apparatus according to some exemplary embodiments of the disclosure. The apparatus includes a slave device communication module 1701.

The slave device communication module 1707 is configured to communicate with a master device after receiving a communication instruction including a public slave device address, where the different slave device correspond to respective communication contents respectively, each slave device is configured with a private slave device address and the public slave device address, different private slave device addresses are configured for the different slave, and the same public slave device address is configured for the different slave devices.

In some alternative implementations, the slave device communication module 1701 is configured to:
after receiving a write data instruction including the public slave device address and a write bit, performing write data communication with the master device, where the different slave devices correspond to respective write data respectively; or
after receiving a read data instruction including the public slave device address and a read bit, performing read data communication with the master device, where the different slave devices correspond to respective read data respectively.

In some alternative implementations, the slave device communication module 1701 is configured to:
after receiving the write data instruction including the public slave device address and the write bit, send an acknowledgement to the master device; and
obtain, from write data sent by the master device, target write data located at a target data position, based on a correspondence between the slave device and a data position, where pieces of write data for the different slave devices are located at different data positions respectively.

In some alternative implementations, the slave device communication module 1701 is configured to:
after receiving the read data instruction including the public slave device address and the read bit, send an acknowledgement to the master device; and
send, based on a correspondence between the slave device and a data position, target read data at a target data position to the master device, where pieces of read data sent by the different slave devices are located at different data positions respectively.

In some alternative implementations, the apparatus further includes a configuration module, configured to:
receive a data position configuration instruction sent by the master device, where the data position configuration instruction comprises the private slave device address, and the data position configuration instruction is used to configure a data position used for the slave device to perform data reading/writing; and
configure the data position for data reading/writing, based on the data position configuration instruction.

In some alternative implementations, the data position configuration instruction includes the private slave device address, a first register address, and a data position identifier.

The configuration module is configured to: write the data position identifier into a first register indicated by the first register address, where the data position identifier is used to indicate the data position used for the slave device to perform data reading/writing.

In some alternative implementations, the apparatus further includes a configuration module, configured to:
receive a read/write content configuration instruction sent by the master device, where the read/write content configuration instruction comprises the private slave device address; and configure read/write data content based on the read/write content configuration instruction; or
receive a read/write address configuration instruction sent by the master device, where the read/write address configuration instruction is used to configure a register address used for the slave device to perform data reading/writing; and configure a data read/write address based on the read/write address configuration instruction.

In some alternative implementations, the read/write content configuration instruction comprises the private slave device address, a second register address, and a data content identifier.

The configuration module is configured to write the data content identifier into a second register indicated by the second register address, where the data content identifier is used to indicate the read/write data content of the slave device.

The slave device communication module 1701 is further configured to:
determine a data read/write address corresponding to the read/write data content, based on a correspondence between the data content and an address;
after receiving the write data instruction including the public slave device address and the write bit, perform write data communication with the master device based on the data read/write address; and
after receiving the read data instruction including the public slave device address and the read bit, perform read data communication with the master device based on the data read/write address.

In some alternative implementations, the read/write address configuration instruction comprises the private slave device address, a third register address, and a fourth register address.

The configuration module is configured to write the fourth register address into a third register indicated by the third register address, where the fourth register address is an address where the slave device performs data reading/writing.

The slave device communication module 1701 is further configured to:
after receiving the write data instruction including the public slave device address and the write bit, perform write data communication with the master device based on the fourth register address; and
after receiving the read data instruction including the public slave device address and the read bit, perform read data communication with the master device based on the fourth register address.

In some alternative implementations, the apparatus further includes a configuration module configured to:
receive a slave device address configuration instruction sent by the master device, where the slave device address configuration instruction comprises the private slave device address; and
configure the public slave device address based on the slave device address configuration instruction.

In some alternative implementations, the slave device address configuration instruction comprises the private slave device address, a fifth register address, and the public slave device address.

The configuration module is further configured to:
write the public slave device address into a fifth register indicated by the fifth register address.

Referring to FIG. 18, FIG. 18 is a structural block diagram of a computer device according to some exemplary embodiments of the disclosure. The computer device includes a master device 1810 and two or more slave devices 1820. The master device 1810 is serially connected to each of the two or more slave devices 1820 via a serial data line. The computer device may be an electronic device such as a smartphone, a tablet computer, a smart wearable device, or a personal computer. The computer device may also be referred to as a user device, a portable terminal, or other similar terminology.

In some embodiments, the master device 1810 includes a processor 1811 and a memory 1812, and the slave device 1820 also includes a processor 1821 and a memory 1822.

In some alternative implementations, the processor may be connected to various parts of the entire electronic device by using various interfaces and lines, and execute various functions of the electronic device and process data, by running or executing instructions, programs, code sets, or instruction sets stored in the memory, and calling data stored in the memory. In some alternative implementations, the processor may be implemented in at least one hardware of a digital signal processing (DSP), a field-programmable gate array (FPGA), and a programmable logic array (PLA). The processor may integrate one or more of a central processing unit (CPU), a graphics processing unit (GPU), neural-network processing unit (NPU) and a baseband chip. The CPU mainly handles an operating system, a user interface, an application, or the like. The GPU is configured to render and draw the content required to be displayed by the touch display screen. The NPU is used to implement artificial intelligence (AI) functions. The baseband chip is used to handle wireless communications. It can be understood that the baseband chip may be implemented as a single chip instead of being integrated into the processor.

The memory may include a random access memory (RAM), and may also include a read-only memory (ROM). In some alternative implementations, the memory may include a non-transitory computer-readable storage medium. The memory may be configured to store instructions, programs, codes, code sets, or instruction sets. The memory may include a program storage area and a data storage area. The program storage area may store instructions for implementing the operating system, instructions for realizing at least one function, instructions for implementing the following method embodiments, etc. The data storage area may store data created based on the use of the electronic device, etc.

In addition, those skilled in the art would understand that the structure of the computer device illustrated in the above drawing does not constitute a limitation on the computer device. The computer device may include more or fewer components than illustrated in the drawing, or certain components may be combined, or different component arrangements may be used.

Some embodiments of the disclosure further provide a chip. The chip includes a programmable logic circuit and/or program instructions. When the chip is running, it is configured to implement the device communication method on the master device side, or the device communication method on the slave device side according to the above embodiments.

Some embodiments of the disclosure further provide a computer-readable storage medium. The computer-readable storage medium stores one or more instructions which, when being loaded and executed by a processor, cause the device communication method according to the above embodiments to be implemented. In some alternative implementations, the computer-readable storage medium may include: ROM, RAM, solid-state drives (SSDs), or optical disks. Specifically, RAM may include resistance random access memory (ReRAM) and dynamic random access memory (DRAM).

Some embodiments of the disclosure further provide a computer program product or a computer program. The computer program product or the computer program includes computer instructions stored in a computer-readable storage medium. A processor of a computer device reads the computer instructions from the computer-readable storage medium, and the processor executes the computer instructions to cause the computer device to perform the methods provided in various embodiments and optional implementations of the above aspects.

The foregoing are merely alternative embodiments of the disclosure and are not intended to limit the disclosure. Any modification, equivalent substitute, improvement, and the like, made within the spirit and principle of the disclosure shall be included in the protection scope of the disclosure.

## Claims

1. A device communication method, wherein the method is implemented by a master device, the master device is serially connected to two or more slave devices via a serial data line, and the method comprises:
performing synchronous communication with the two or more slave devices, based on a communication instruction comprising a public slave device address, wherein different slave devices correspond to respective communication contents respectively, each of the two or more slave devices is configured with a private slave device address and the public slave device address, different private slave device addresses are configured for the different slave devices, and the same public slave device address is configured for the different slave devices.

2. The method as claimed in claim 1, wherein performing the synchronous communication with the two or more slave devices based on the communication instruction comprising the public slave device address, comprises:
performing write data communication with the two or more slave devices, based on a write data instruction comprising the public slave device address and a write bit, wherein the different slave devices correspond to respective write data respectively; or
performing read data communication with the two or more slave devices, based on a read data instruction comprising the public slave device address and a read bit, wherein the different slave devices correspond to respective read data respectively.

3. The method as claimed in claim 2, wherein performing the write data communication with the two or more slave devices based on the write data instruction comprising the public slave device address and the write bit, comprises:
sending the write data instruction to the two or more slave devices, based on the public slave device address and the write bit; and
after receiving an acknowledgement to the write data instruction, sending the respective write data to the two or more slave devices based on correspondences between the slave devices and data positions, wherein pieces of write data for the different slave devices are located at different data positions respectively.

4. The method as claimed in claim 2, wherein performing the read data communication with the two or more slave devices based on the read data instruction comprising the public slave device address and the read bit, comprises:
sending the read data instruction to the two or more slave devices, based on the public slave device address and the read bit; and
after receiving an acknowledgement to the read data instruction, receiving read data sent by the different slave devices based on correspondences between the slave devices and data positions, wherein pieces of read data from the different slave devices are located at different data positions respectively.

5. The method as claimed in claim 3 or 4, wherein before performing the synchronous communication with the two or more slave devices based on the communication instruction comprising the public slave device address, the method further comprises:
sending a data position configuration instruction to each of the slave devices based on the private slave device address of the slave device, wherein the data position configuration instruction is used to configure a data position used for the slave device to perform data reading/writing.

6. The method as claimed in claim 5, wherein sending the data position configuration instruction to each of the slave devices based on the private slave device address of the slave device, comprises:
sending the data position configuration instruction to each of the slave devices, based on the private slave device address of the slave device, a first register address, and a data position identifier, wherein a first register indicated by the first register address is used to store the data position identifier, and the data position identifier is used to indicate the data position used for the slave device to perform data reading/writing.

7. The method as claimed in claim 2, wherein before performing the synchronous communication with the two or more slave devices based on the communication instruction comprising the public slave device address, the method further comprises:
sending a read/write content configuration instruction to each of the slave devices based on the private slave device address of the slave device, wherein the read/write content configuration instruction is used to configure read/write data content of the slave device, and the slave device is configured to determine a data read/write address based on correspondences between data contents and addresses; or
sending a read/write address configuration instruction to each of the slave devices based on the private slave device address of the slave device, wherein the read/write address configuration instruction is used to configure a data read/write address of the slave device.

8. The method as claimed in claim 7, wherein sending the read/write content configuration instruction to each of the slave devices based on the private slave device address of the slave device, comprises:
sending the read/write content configuration instruction to each of the slave devices, based on the private slave device address of the slave device, a second register address, and a data content identifier, wherein a second register indicated by the second register address is used to store the data content identifier, and the data content identifier is used to indicate read/write data content of the slave device.

9. The method as claimed in claim 7, wherein sending the read/write address configuration instruction to each of the slave devices based on the private slave device address of the slave device, comprises:
sending the read/write address configuration instruction to each of the slave devices, based on the private slave device address of the slave device, a third register address, and a fourth register address, wherein a third register indicated by the third register address is used to store the fourth register address, and the fourth register address is an address where the slave device performs data reading/writing.

10. The method as claimed in any one of claims 1 to 9, wherein before performing the synchronous communication with the two or more slave devices based on the communication instruction comprising the public slave device address, the method further comprises:
sending a slave device address configuration instruction to each of the slave devices based on the private slave device address of the slave device, wherein the slave device address configuration instruction is used to configure the public slave device address of the slave device.

11. The method as claimed in claim 10, wherein sending the slave device address configuration instruction to each of the slave devices based on the private slave device address of the slave device, comprises:
sending the slave device address configuration instruction to each of the slave devices, based on the private slave device address of the slave device, a fifth register address, and the public slave device address, wherein a fifth register indicated by the fifth register address is used to store the public slave device address.

12. A device communication method, wherein the method is implemented by a slave device, the slave device is serially connected to a master device via a serial data line, and the method comprises:
communicating with the master device after receiving a communication instruction comprising a public slave device address, wherein different slave devices correspond to respective communication contents respectively, each slave device is configured with a private slave device address and the public slave device address, different private slave device addresses are configured for the different slave devices, and the same public slave device address is configured for the different slave devices.

13. The method as claimed in claim 12, wherein communicating with the master device after receiving the communication instruction comprising the public slave device address, comprises:
after receiving a write data instruction comprising the public slave device address and a write bit, performing write data communication with the master device, wherein the different slave devices correspond to respective write data respectively; or
after receiving a read data instruction comprising the public slave device address and a read bit, performing read data communication with the master device, wherein the different slave devices correspond to respective read data respectively.

14. The method as claimed in claim 13, wherein performing the write data communication with the master device after receiving the write data instruction comprising the public slave device address and the write bit, comprises:
after receiving the write data instruction comprising the public slave device address and the write bit, sending an acknowledgement to the master device; and
obtaining, from write data sent by the master device, target write data located at a target data position, based on correspondences between the slave devices and data positions, wherein pieces of write data for the different slave devices are located at different data positions respectively.

15. The method as claimed in claim 13, wherein performing the read data communication with the master device after receiving the read data instruction comprising the public slave device address and the read bit, comprises:
after receiving the read data instruction comprising the public slave device address and the read bit, sending an acknowledgement to the master device; and
sending, based on correspondences between the slave devices and data positions, target read data at a target data position to the master device, wherein pieces of read data sent by the different slave devices are located at different data positions respectively.

16. The method as claimed in claim 14 or 15, wherein before communicating with the master device after receiving the communication instruction comprising the public slave device address, the method further comprises:
receiving a data position configuration instruction sent by the master device, wherein the data position configuration instruction comprises the private slave device address, and the data position configuration instruction is used to configure a data position used for the slave device to perform data reading/writing; and
configuring the data position for data reading and writing, based on the data position configuration instruction.

17. The method as claimed in claim 16, wherein the data position configuration instruction comprises the private slave device address, a first register address, and a data position identifier; and
wherein configuring the data position for data reading and writing based on the data position configuration instruction, comprises:
writing the data position identifier into a first register indicated by the first register address, wherein the data position identifier is used to indicate the data position used for the slave device to perform data reading/writing.

18. The method as claimed in claim 13, wherein before communicating with the master device after receiving the communication instruction comprising the public slave device address, the method further comprises:
receiving a read/write content configuration instruction sent by the master device, wherein the read/write content configuration instruction comprises the private slave device address; and configuring read/write data content based on the read/write content configuration instruction; or
receiving a read/write address configuration instruction sent by the master device, wherein the read/write address configuration instruction is used to configure a register address used for the slave device to perform data reading/writing; and configuring a data read/write address based on the read/write address configuration instruction.

19. The method as claimed in claim 18, wherein the read/write content configuration instruction comprises the private slave device address, a second register address, and a data content identifier; and
wherein configuring the read/write data content based on the read/write content configuration instruction, comprises:
writing the data content identifier into a second register indicated by the second register address, wherein the data content identifier is used to indicate the read/write data content of the slave device;
wherein the method further comprises:
determining a data read/write address corresponding to the read/write data content, based on correspondences between data contents and addresses;
wherein performing write data communication with the master device after receiving the write data instruction comprising the public slave device address and the write bit, comprises:
after receiving the write data instruction comprising the public slave device address and the write bit, performing write data communication with the master device based on the data read/write address; and
wherein performing read data communication with the master device after receiving the read data instruction comprising the public slave device address and the read bit, comprises:
after receiving the read data instruction comprising the public slave device address and the read bit, performing read data communication with the master device based on the data read/write address.

20. The method as claimed in claim 18, wherein the read/write address configuration instruction comprises the private slave device address, a third register address, and a fourth register address; and
wherein configuring the data read/write address based on the read/write address configuration instruction, comprises:
writing the fourth register address into a third register indicated by the third register address, wherein the fourth register address is an address where the slave device performs data reading/writing; and
wherein performing write data communication with the master device after receiving the write data instruction comprising the public slave device address and the write bit, comprises:
after receiving the write data instruction comprising the public slave device address and the write bit, performing the write data communication with the master device based on the fourth register address; and
wherein performing read data communication with the master device after receiving the read data instruction comprising the public slave device address and the read bit, comprises:
after receiving the read data instruction comprising the public slave device address and the read bit, performing the read data communication with the master device based on the fourth register address.

21. The method as claimed in any one of claims 12 to 20, wherein before communicating with the master device after receiving the communication instruction comprising the public slave device address, the method further comprises:
receiving a slave device address configuration instruction sent by the master device, wherein the slave device address configuration instruction comprises the private slave device address; and
configuring the public slave device address based on the slave device address configuration instruction.

22. The method as claimed in claim 21, wherein the slave device address configuration instruction comprises the private slave device address, a fifth register address, and the public slave device address; and
wherein configuring the public slave device address based on the slave device address configuration instruction, comprises:
writing the public slave device address into a fifth register indicated by the fifth register address.

23. A device communication apparatus, comprising:
a master device communication module, configured to perform synchronous communication with two or more slave devices, based on a communication instruction comprising a public slave device address, wherein different slave devices correspond to respective communication contents respectively, each of the two or more slave devices is configured with a private slave device address and the public slave device address, deferent private slave device addresses are configured for the different slave devices, and the same public slave device address is configured for the different slave devices.

24. A device communication apparatus, comprising:
a slave device communication module, configured to communicate with a master device after receiving a communication instruction including a public slave device address, wherein different slave device correspond to respective communication contents respectively, each slave device is configured with a private slave device address and the public slave device address, different private slave device addresses are configured for the different slave devices, and the same public slave device address is configured for the different slave devices.

25. A chip, comprising a programmable logic circuit and/or program instructions, wherein the chip is configured to, when running, implement the device communication method as claimed in any one of claims 1 to 11, or the device communication method as claimed in any one of claims 12 to 22.

26. A computer device, comprising a master device and two or more slave devices, wherein the master device is serially connected to the two or more slave devices via a serial data line;
a memory of the master device storing one or more instructions which, when being executed by a processor of the master device, cause the device communication method as claimed in any one of claims 1 to 11 to be implemented; and
a memory of each of the two or more slave devices stores one or more instructions which, when being executed by a processor of the slave device, cause the device communication method any one of claims 12 to 22 to be implemented.

27. A computer-readable storage medium, storing one or more instructions which, when being executed by a processor, cause the device communication method as claimed in any one of claims 1 to 22 to be implemented.

28. A computer program product, wherein the computer program product comprises computer instructions stored in a computer-readable storage medium, a processor of a computer device is configured to read the computer instructions from the computer-readable storage medium, and the processor is configured to execute the computer instructions to cause the computer device to implement the device communication method as claimed in any one of claims 1 to 22.
